# EUROPÄISCHE PATENTSCHRIFT

(11) **EP 0 303 959 B1**
(45) Veröffentlichungstag und Bekanntmachung des Hinweises auf die Patenterteilung: **04.08.1993**
(21) Anmeldenummer: 88112989.4
(22) Anmeldetag: 10.08.1988
(51) Int. Cl.: C09H 9/04

(54) **Kaltwasserlösliche, instantisierte Gelatine und Verfahren zur Herstellung derselben**
Ready for use gelatin soluble in cold water and process for its preparation
Gélatine, soluble dans l'eau froide, à usage instantané et procédé pour la préparer

(30) Priorität: 13.08.1987 DE 3726963
(43) Veröffentlichungstag der Anmeldung: 22.02.1989
(73) Patentinhaber: Deutsche Gelatine-Fabriken Stoess AG, 69402 Eberbach (DE)
(72) Erfinder: Müller, Alexander, D-6930 Eberbach/Baden (DE)
(74) Vertreter: Werner, Hans-Karsten, Dr.Dipl.-Chem.

(56) Entgegenhaltungen:
- DE-A- 541 332
- GB-A- 451 749
- US-A- 2 834 683
- PATENT ABSTRACTS OF JAPAN, Band 10, Nr. 366 (C-390)[2423], 6. Dezember 1986; & JP-A-61 163 963
- PATENT ABSTRACTS OF JAPAN, Band 12, Nr. 22 (C-470)[2869], 22. Januar 1988; & JP-A-62 174 231

## Beschreibung

Gegenstand der vorliegenden Erfindung ist kaltwasserlösliche, instantisierte Gelatine mit voller Gelierkraft die durch Trocknung von Gelatinelösungen gewonnen wird.

Gelatine ist von natur aus nur in heißem Wasser löslich, wobei sie zweckmäßigerweise vorher in kaltem Wasser gequollen wird. Da eine Reihe von Produkten, die mit Gelatine geliert werden sollen, äußerst temperaturempfindlich sind und darüber hinaus das Vorquellen-, Erwärmen- und Abkühlenlassen mit einem nicht unerheblichen Aufwand verbunden ist, besteht seit langem das Bedürfnis, Gelatine in eine kaltwasserlösliche, instantisierte Form zu bringen. Nach dem Stand der Technik gibt es bereits zwei prinzipiell verschiedene Wege, kaltwasserlösliche, instantisierte Gelatine herzustellen:

Der erste Weg besteht darin, die Gelatine zusammen mit Zusätzen zu trocknen. Als geeignete Zusätze haben sich insbesondere Zucker, organische Säuren und Harnstoff erwiesen.

Der zweite Weg besteht darin, Gelatine ohne Zusätze zu übertrocknen. Während handelsübliche Gelatine einen Wassergehalt von 8 bis 12% aufweist, enthält die übertrocknete, instantisierte Gelatine nur noch einen Wassergehalt von ca. 4%.

Die kaltwasserlösliche, instantisierte Gelatine mit Zusätzen weist den Nachteil auf, daß für eine Reihe von Verwendungszwecken diese Zusätze unerwünscht oder störend sind.

Die instantisierte Gelatine ohne Zusätze weist den Nachteil auf, daß ihre Gelierkraft wesentlich geringer ist als die des Ausgangsmaterials im normal getrockneten Zustand. Diese übertrocknete Gelatine bildet im Grunde auch kein echtes Gel mehr, sondern nur noch ein Pseudogel. Es erfolgt keine echte Auflösung mehr.

Es besteht somit noch immer ein echtes Bedürfnis für kaltwasserlösliche, instantisierte Gelatine mit voller Gelierkraft, die jedoch keine Zusätze enthält. Es wurde jetzt überraschenderweise gefunden, daß eine derartige Gelatine herstellbar ist, indem eine reine Gelatinelösung ohne Zusätze mit einem Wassergehalt von mindestens 35% bei Temperaturen oberhalb der Gelier- und Erstarrungstemperatur auf überschüssige, feinteilige, feste Gelatineteilchen aufgesprüht wird, die weniger als 8% Wasser enthalten, und die so erhaltenen Teilchen im Fließbett auf einen Wassergehalt von 8 bis 13% getrocknet werden, wobei ein Anteil als fertiges Produkt aus dem Verfahren ausgeschleust und weiter getrocknet wird auf einen für das optimale Auflösen in kaltem Wasser erforderlichen Wassergehalt und der Rest zunächst stärker getrocknet auf einen Wassergehalt unter 8% in das Verfahren zurückgeführt wird.

Dieses Ergebnis war völlig überraschend, da die Fachwelt nach langjährigen Bemühungen um ein derartiges Produkt bereits zu der Ansicht gelangt war, daß kaltwasserlösliche, instantisierte Gelatine entweder Zusätze haben müsse oder einen Großteil ihrer Gelierkraft einbüße. Es war weiterhin völlig überraschend, daß ein derartiges Produkt unter den erfindungsgemäßen Bedingungen entstehen würde, da die Fachwelt wußte, daß Temperaturbelastungen die Eigenschaften der Gelatine rasch verschlechtern, und zwar bezüglich der Gelierkraft, der Wasserlöslichkeit und der Farbe.

Die Trocknung von Gelatinelösungen mit oder ohne Zusätzen erfolgt daher stets bei möglichst niedrigen Temperaturen und damit deutlich unterhalb der Gelier- und Erstarrungstemperatur. Erfindungsgemäß wird die Gelatinelösung vor allem im Bereich zwischen 70 und 120°C auf die überschüssigen, feinteiligen, festen Gelatineteilchen aufgesprüht. Dabei hat es sich als vorteilhaft erwiesen, die Gelatinelösung unmittelbar aus der Sterilisierungsstufe zu entnehmen und zu versprühen.

Frühere Versuche, derartige Gelatinelösungen durch Sprühtrocknung in feste Gelatine zu überführen, sind stets daran gescheitert, daß Gelatine unter den Bedingungen der Sprühtrocknung klebrige Fäden bildet und deshalb für die Sprühtrocknung ungeeignet ist. Es wurde erst jetzt festgestellt, daß es durchaus möglich ist, versprühte heiße Gelatinelösungen in feste Gelatine zu überführen, wenn man sie auf überschüssige, feinteilige, feste Gelatineteilchen aufsprüht, die weniger als 8% Wasser enthalten. Anscheinend sind die überschüssigen, feinteiligen, festen Gelatineteilchen in der Lage, sehr viel rascher als die Trocknungsluft einer Sprühtrocknungsanlage das überschüssige Wasser aus der Gelatinelösung aufzunehmen und dadurch die klebrige Phase zu verkürzen. Überraschenderweise gewinnen dabei die an sich übertrockneten festen Gelatineteilchen ihre ursprüngliche Gelierkraft wieder, so daß das erfindungsgemäß erhältliche Produkt im Gegensatz zur bisher bekannten, übertrockneten Gelatine einerseits seine volle Gelierkraft behält, andererseits in kaltwasserlöslicher, instantisierter Form anfällt. Im Gegensatz zu der bisher bekannten instantisierten Gelatine ohne Zusätze bildet das erfindungsgemäße Produkt wieder ein echtes Gel.

Vorzugsweise wird das erfindungsgemäße Verfahren so durchgeführt, daß eine Gelatinelösung mit einem Wassergehalt von 35 bis 70% vorzugsweise 45 bis 55% unmittelbar aus der Sterilisierungsstufe entnommen und dann bei Temperaturen zwischen 70 und 120°C auf ein Fließbett mit vorgelegtem Produkt versprüht wird. Dabei wird das Verfahren dann so durchgeführt, daß zunächst ein Durchschnittswassergehalt von vorzugsweise 10 bis 13% entsteht und dieses Produkt auf einen Wassergehalt von 3,5 bis 5% getrocknet und dann in das Verfahren zurückgeführt wird. Dabei wird ein Teil, der mengenmäßig der Trockensubstanz der eingesprühten Lösung entspricht an geeigneter Stelle so entnommen, daß es die für dieses Material optimale Feuchtigkeit aufweist. Gewünschtenfalls wird weitergetrocknet auf einen für die Auflösung in kaltem Wasser optimalen Wassergehalt. Dabei ist es ohne weiteres möglich, entstandenes Überkorn abzutrennen und in zerkleinerter Form in das Verfahren zurückzuführen. Vorzugsweise wird jedoch das Fertigprodukt klassiert und sowohl das Unterkorn als auch das zerkleinerte Überkorn in das Verfahren zurückgegeben. Erfindungsgemäß ist es möglich, Korngrößenverteilung und Schüttgewicht des Endproduktes zu variieren, während bisher nahezu ausschließlich ein Schüttgewicht von ca. 600 g/l anfiel. Weiterhin ist es möglich, anstatt Gelatine auch Kollagenpartialhydrolysate erfindungsgemäß zu verarbeiten, was insbesondere für kaltwasserlöslichen, instantisierten Leim oder Gelatinehydrolysat von Bedeutung ist.

Für das erfindungsgemäße Verfahren sind prinzipiell alle Fließbetttrockner geeignet, in denen die zu trocknenden Lösungen auf die bereits vorhandenen überschüssigen, feinteiligen, festen Gelatineteilchen versprühtwerden können. Als besonders geeignet haben sich Fließbett-Sprüh-Granulatoren erwiesen.

Erfindungsgemäß können aber auch Bandtrockner mit entsprechender Sprüheinrichtung oder Vibrations-Fließbetttrockner eingesetzt werden. Von entscheidender Bedeutung ist allein, daß durch die ausreichende mechanische Bewegung der Teilchen die klebrige Phase der eintrocknenden Gelatinelösung überwunden wird und es dadurch nicht zu den endgültigen Verklebungen kommt wie beim Sprühtrocknen. Zum anderen muß das Verfahren so geführt werden, daß die versprühten Gelatinelösungen oberhalb der Gelier- und Erstarrungstemperatur auf die überschüssigen, feinteiligen, festen Gelatineteilchen auftreffen. Sobald die trocknenden Gelatinelösungen die Gelphase durchlaufen, verliert die entstehende feste Gelatine ihre Kaltwasserlöslichkeit.

Um das erfindungsgemäße Verfahren erstmals zu starten, können als überschüssige, feinteilige, feste Gelatineteilchen auch die bisher bekannte, übertrocknete, instantisierte Gelatine oder ein Kollagenhydrolysat ohne Zusatz eingesetzt werden. Man erhält dadurch zunächst eine Fraktion, die noch Anteile instantisierter Gelatine oder Gelatinehydrolysat mit verminderter Gelierkraft enthält. Diese Fraktion wird vorzugsweise durch Auflösen in das Verfahren zurückgeschleust oder anderen Verwendungszwecken zugeführt. Sobald eine ausreichende Menge der erfindungsgemäßen kaltwasserlöslichen, instantisierten Gelatine vorliegt, kann man diese als Startmaterial einsetzen, indem man sie im Fließbetttrockner auf 3,5 bis 5% Wasser trocknet und dann in der beschriebenen Weise mit der heißen Gelatinelösung besprüht.

Das erfindungsgemäße Verfahren wird vorzugsweise so durchgeführt, daß einerseits so wenig Wasser wie möglich im Fließbett verdampft werden muß, da es sich hierbei um eine relativ kostspielige und aufwendige Art der Entfernung des Wassers handelt; andererseits ist jedoch darauf zu achten, daß die Viskosität der Gelatinelösung noch so niedrig wie möglich ist, damit sich die Lösung gut versprühen und gut auf den festen Gelatineteilchen verteilen läßt. Temperaturen unter 70°C erfordern somit einen höheren Wassergehalt der Lösung und bedingen dadurch höhere Trocknungskosten. Außerdem nähert man sich bei Temperaturen von unter 70°C zu sehr der Gelier- und Erstarrungstemperatur. Temperaturen über 140°C führen zu einer zu starken thermischen Belastung der Gelatine. Bei der sogenannten Kurzsterilisation (140 °C während 6 Sekunden) fällt eine derartige niedrigviskose, hocherhitzte Lösung an, deren Wassergehalt sogar auf 35% reduziert werden kann. Eine derartige Gelatinelösung muß dann aber unverzüglich versprüht werden. Da die übliche Sterilisation bei ca. 115°C während einer Zeitdauer von 5 Minuten erfolgt, sind derartige Lösungen optimal geeignet, nach dem erfindungsgemäßen Verfahren versprüht zu werden.

Die erfindungsgemäß hergestellte, kaltwasserlösliche, instantisierte Gelatine mit voller Gelierkraft, jedoch ohne Zusätze, kann überall dort zum Einsatz kommen, wo bisher kaltwasserlösliche, instantisierte Gelatine zum Einsatz gekommen ist. Darüber hinaus bieten sich neue Anwendungsmöglichkeiten, wo bisher entweder die Zusätze oder die geringe Gelierkraft als störend empfunden wurden und es daher notwendig war, den umständlicheren Weg des Vorquellens und Lösens in heißem Wasser zu wählen.

Das erfindungsgemäße Verfahren ist in den nachfolgenden Beispielen näher erläutert:

### Beispiel 1

Eine 50%-ige Gelatinelösung ohne Zusätze wird unmittelbar aus der Sterilisationsstufe bei 115°C entnommen und auf ein Fließbett von ca. 80°C gesprüht, welches pro Zeiteinheit etwa die zehnfache Menge an feinteiliger, fester Gelatine vorbeiführt. Der Wassergehalt der feinteiligen, festen Gelatineteilchen beträgt 4%. Ca. 10% der so erhaltenen Teilchen werden als Fertigprodukt entnommen und weisen nach Abkühlung mit Kaltluft einen Wassergehalt von ca. 10% auf. Der Rest der besprühten Gelatineteilchen wird bis auf einen Wassergehalt von ca. 4% weitergetrocknet und dann erneut in die Sprühzone zurückgeführt. Das erhaltene Produkt ist kaltwasserlöslich, instantisiert und weist die volle Gelierkraft der eingesetzten Gelatine auf.

### Beispiel 2

Der Wassergehalt der eingesetzten Gelatinelösung wurde zwischen 45 und 55% variiert. Durch Variation der Trocknungsbedingungen und der Durchlaufzeiten war es möglich, 7 bis 15% Fertigprodukt mit einem Wassergehalt von 9 bis 11% zu erhalten. Es handelte sich stets um kaltwasserlösliche, instantisierte Gelatine mit voller Gelierkraft, jedoch ohne Zusätze.

### Beispiel 3

Unter vergleichbaren Bedingungen wie in Beispiel 1 beschrieben wurde die Lösung eines warmwasserlöslichen Leimes auf Kollagenbasis verarbeitet. Es entstand ein kaltwasserlöslicher, instantisierter Leim auf Kollagenbasis.

### Beispiel 4

Unter vergleichbaren Bedingungen wie in Beispiel 1 beschrieben wurde die Lösung eines Gelatinehydrolysates mit einem Molekulargewicht von kleiner als 15000 verarbeitet. Es entstand ein kaltwasserlösliches, instantisiertes Gelatinehydrolysat mit einem Schüttgewicht von mehr als 500 g/l.

## Patentansprüche

1. Verfahren zur Herstellung von kaltwasserlöslicher, instantisierter Gelatine durch Trocknung von Gelatinelösungen, dadurch gekennzeichnet, daß eine reine Gelatinelösung ohne Zusätze mit einem Wassergehalt von 35 bis 70 % bei Temperaturen oberhalb der Gelier- und Erstarrungstemperatur zwischen 70 und 120°C auf überschüssige, feinteilige feste Gelatineteilchen aufgesprüht wird, die weniger als 8% Wasser enthalten, und die so erhaltenen Teilchen im Fließbett auf einen Wassergehalt von 8 bis 13% getrocknet werden, wobei ein Anteil als fertiges Produkt aus dem Verfahren ausgeschleust und weiter getrocknet wird auf einen für das optimale Auflösen in kaltem Wasser erforderlichen Wassergehalt und der Rest zunächst stärker getrocknet auf einen Wassergehalt unter 8% in das Verfahren zurückgeführt wird.

2. Verfahren nach Anspruch 1, dadurch gekennzeichnet, daß die Gelatinelösung unmittelbar aus der Sterilisierungsstufe entnommen und versprüht wird.

3. Verfahren gemäß einem der Ansprüche 1 oder 2, dadurch gekennzeichnet, daß zunächst auf einen Wassergehalt von 9 bis 11% getrocknet wird und nach Ausschleusung von 7 bis 15% Fertigprodukt der Rest auf einen Wassergehalt von 3,5 bis 5% weitergetrocknet wird.

4. Verfahren gemäß einem der Ansprüche 1 bis 3, dadurch gekennzeichnet, daß das Fertigprodukt klassiert wird und sowohl das Unterkorn als auch das zerkleinerte Überkorn in das Verfahren zurückgeführt werden.

5. Kaltwasserlösliche, instantisierte Gelatine mit voller Gelierkraft erhalten nach dem Verfahren der Ansprüche 1-4, dadurch gekennzeichnet, daß sie keine Zusätze enthält.

## Claims

1. A process for producing a cold water-soluble instantized gelatin by drying gelatin solutions, characterized in that a pure gelatin solution without additives and having a water content of from 35% to 70% at a temperature in excess of the gelation and solidification temperature between 70 °C and 120 °C is sprayed onto an excess of finely divided solid gelatin particles which contain less than 8% of water, and the particles as thus obtained are dried in a fluid bed to a water content of from 8 to 13%, whereupon a portion is withdrawn from the process as final product and is further dried to a water contents as required for optimum dissolution to occur in cold water, while the remainder first is more effectively dried to a water content of below 8% and is recycled into the process.

2. The process according to claim 1, characterized in that the gelatin solution is directly taken from the sterilization stage and sprayed.

3. The process according to anyone of claims 1 or 2, characterized in that the particles are first dried to a water content of from 9 to 11% and upon withdrawal of from 7 to 15% of final product the remainder is continued to be dried to a water contents of from 3.5 to 5%.

4. The process according to anyone of claims 1 to 3, characterized in that the final product is classified and both the undersize and comminuted oversize materials are returned into the process.

5. A cold water-soluble instantized gelatin having full gelation ability, obtained by the process according to claims 1 to 4, characterized in that it contains no additives.

## Revendications

1. Procédé d'obtention de gélatine instantanée, soluble dans l'eau froide, par dessiccation de solutions de gélatine, caractérisé en ce qu'on projette une solution de gélatine pure, sans additif, ayant une teneur en eau de 35 à 70 %, à des températures supérieures à celle de gélification et solidification, entre 70 et 120°C, sur des particules fines de gélatine solide, contenant moins de 8 % d'eau, ces particules fines étant en excès et on fait sécher les particules ainsi obtenues en lit fluidisé jusqu'à une teneur en eau de 8 à 13 %,
une partie est extraite du processus pour constituer un produit fini, et ensuite séchée jusqu'à atteindre la teneur en eau nécessaire pour la solubilité optimale dans l'eau froide, et le reste est d'abord séché plus fortement, jusqu'à une teneur en eau inférieure à 8 %, puis recyclé dans le processus.

2. Procédé selon la revendication 1, caractérisé en ce qu'on prélève directement la solution de gélatine d'un poste de stérilisation pour la projeter.

3. Procédé selon la revendication 1 ou 2, caractérisé en ce qu'on sèche d'abord les particules jusqu'à une teneur en eau de 9 à 11 % et, après extraction de 7 à 15 % de produit fini, le reste est séché à nouveau jusqu'à une teneur en eau de 3,5 à 5 %.

4. Procédé selon l'une des revendications 1 à 3, caractérisé en ce qu'on soumet le produit fini à un tamisage, et on recycle dans le processus le tamisat inférieur ainsi que le tamisat supérieur broyé.

5. Gélatine instantanée, soluble dans l'eau froide, à grand pouvoir gélifiant, obtenue selon le procédé d'une des revendications 1 à 4, caractérisée en ce qu'elle ne contient aucun additif.
